# EUROPEAN PATENT APPLICATION

(11) **EP 1 860 609 A1**
(43) Date of publication of application: **28.11.2007**
(21) Application number: 07010209.0
(22) Date of filing: 23.05.2007
(51) Int. Cl.: G06Q 50/00, G01C 21/20, G09B 29/10, G07C 11/00

(54) **Method, system and guiding unit for guiding at least one person through an area**

(30) Priority: 24.05.2006 NL 1031870
(71) Applicant: 2 Hold Touchvision B.V., 7091 HS Dinxperlo (NL)
(72) Inventor: Bouwman, Franciscus Johannus, 7093 CT Stokkum (NL)
(74) Representative: Dohmen, Johannes Maria Gerardus

(57) **Abstract**

The present invention provides a method for guiding at least one person through an area, wherein said at least one person is provided with a guiding unit and said at least one person is guided through said area by means of said guiding unit. Said method further comprises said steps of: receiving one or more selection coilections comprising one or more location identification codes prior to providing said person with said guiding unit, each location identification code identifying at least one location in said area; registering a collection code for each of said aforesaid one or more received selection collections; providing said at least one person with a guiding unit in which a personal selection collection of said one or more selection collections is stored, said personal selection collection being related to a personal collection code as specified by said person, wherein said guiding unit guides said person to said at least one location that is identified by said one or more location identification codes in said personal selection collection, and wherein said personal selection collection is provided to a processing system from said guiding unit after said guiding step so as to enable further processing steps on said basis of said personal selection collection. The invention further provides a system for use in such a method.

## Description

The present invention relates to a method for guiding at least one person through an area, wherein said at least one person is provided with a guiding unit and said at least one person is guided through the area by means of the guiding unit, wherein the method further comprises the steps of: receiving one or more selection collections comprising one or more location identification codes, prior to providing the person with the guiding unit, each location identification code identifying at least one location in said area; registering a collection code for each of said one or more received selection collections; providing said at least one person with a guiding unit in which a personal selection collection of said one or more selection collections is stored, said personal selection collection being associated with to a personal collection code as specified by said person, wherein the guiding unit guides the person to the at least one location that is identified by said one or more location identification codes in the personal selection collection.

The present invention further relates to a system and a guiding unit for use in such a method.

Such a method is for example used in museums for guiding persons through the museum. The person is provided with information about all kinds of objects to be viewed in the museum, such as paintings, antique items and the like. Such a system is also used on golf courses, for example, where the guiding unit guides the user over the golf course and provides the user with information about the various holes to be played.

A drawback of this method is the fact that the personal requirements of the persons to be guided are not taken into account. In a museum and on the golf course, persons are for example guided along a fixed mapped out route. In some cases the user of such a system can make individual personal selections, for example by requesting the route to a particular painting in a museum. If the user requests several paintings in this manner, for example, the user will be directed at random from one selected painting to another, so that the user will not take the most efficient route through the museum, which will cost relatively much time.

Another drawback of the random selection of different objects by the user is that the user is not given time to consider his or her selection, so that he or she may overlook some of the locations or objects in the area that he or she might be interested in.

The latter problem occurs in particular when such a system is used in a shop, for example, where the person may overlook some articles when making a selection from various articles. This may cause the user to assume that fewer possibilities are available than there actually are, so that he or she cannot make a well choice. If the system is for example used in shops in which relatively high priced articles are sold, or products that may effect drastic changes for the user, this constitutes an even greater problem, since the user will usually need much time to make selections in that case.

US patent application US 2004/0078813 and US patent US 5,948,040 are directed at electronic tour guides, which enable the user to indicate places of interest prior to visiting a specific geographic region, which places are arranged in a travel route. Based on the global positioning system (GPS), the user is locally guided along the selected route and is given information about the places of interest. Said applications are not suitable for use in museums or shops, in the first place because they have not been designed for that purpose but rather for covering distances. Museums and shops are generally indoor establishments, where reception of GPS signals is not possible. Furthermore, the GPS system, which is no longer accurate at distances of less than about 10 metres, is not sufficiently accurate for these purposes, where products are often not separated further apart than 0.5 m (or even less) on the shelves. Also in "open air" museums and shops the use of such systems presents specific problems, therefore.

It is an object of the present invention to provide a method for guiding at least one person through an area, in particular a shop, a museum or an exhibition hall, which method provides a solution to the above-mentioned problems and which moreover makes it possible to guide the person through the area in a manner geared to that person's requirements.

This object is accomplished by the present invention in that it provides a method prior to providing said person with said guiding unit, receiving one or more selection collections comprising one or more location identification codes each location identification code identifying at least one location in said area; registering a collection code for each of one or more received selection collections; providing said at least one person with a guiding unit in which a personal selection collection of said one or more selection collections is stored, said personal selection collection being associated with a personal collection code as specified by said person, wherein said guiding unit guides said person to said at least one location that is identified by said one or more location identification codes in said personal selection collection, characterised in that said method further comprises said step of providing said personal selection collection to a processing system from said guiding unit after said guiding step so as to enable further processing steps on said basis of said personal selection collection.

The invention is based on the insight that when it becomes possible for a person to make his requirements known to the guiding system in advance, for example in the form of a list of locations in the area in which he is interested, it becomes possible for the guiding system to guide the user individually. In particular it is possible for the guiding unit to offer alternatives on the basis of the selections made by the person, which alternatives may be considered by the person. Moreover it is possible to put together an optimum route which guides the person past all the selected locations in an efficient manner. The guided tour through the area will take place as efficiently as possible in that case, and information about alternative locations on the route that may be of interest to the person in question may already be given along the way. In addition, no staff is needed for guiding persons through the area and providing information.

Because the personal selection collection is provided to a processing system from the guiding unit after the guiding step, it is possible to carry out further processing steps on the basis of the personal selection collection. This is advantageous in shops, museums or exhibition halls, where the execution of various further processing steps, such as paying for products on the basis of the personal selection collection or providing additional information, for example about paintings of particular interest to the user, may constitute a great deal of added value. All this will be discussed in more detail hereinafter.

According to one embodiment, the further processing steps comprise at least one step selected from a group comprising: transmitting the personal selection collection to a cash desk system, processing business transactions on the basis of the personal selection collection, providing information on the basis of the personal selection collection, for example printing out the information or the personal selection collection, storing the personal selection collection in memory means, transmitting the personal selection collection to a supply management system, updating a supply management system on the basis of the personal selection collection, processing orders, for example sending orders to suppliers, or controlling a logistics system.

According to a preferred embodiment, said one or more selection collections are received via a telecommunication network. Said selection collections may for example be entered by means of communication software, such as design software, a website on the Internet or electronic mail processing software.

By making the selection collections available via a telecommunication network, the user can already indicate his choice from a remote location, for example his house. A particular advantage is obtained when use is made of a website on the Internet, for example, which the user can consult in his leisure time. Information about the various locations in the area can already be provided via the website on the Internet in that case. Said locations may for example be locations in the area where objects are present in which the user takes an interest. Via the website information, for example product information or information about objects in a museum, can be provided to the user in that case, enabling the user to make a selection from the various objects in his leisure time. Based on said selection, the user can compose a selection collection, using scripts such as Java scripts, which selection collection can be transmitted to a guiding system for the area over the Internet.

When the system and the method are for example used for a shop in which kitchens or bathroom equipment are sold, it is possible for the user to design a concept kitchen or bathroom at home, using design software. The user can in that case make a selection from the various materials he wishes to incorporate in the kitchen or bathroom, for example, and on the basis of that selection a selection collection is composed which indicates the location of various objects in the area. Said selection collection is transmitted to the guiding system for the area via the telecommunication network.

After receipt of the selection collection, the system may link said collection to a collection code, for example, which collection code is according to the invention registered in the system. Said collection code may also be made available to the person who has composed the selection collection, for example.

When the person visits the area, for example after some time, and states his personal collection code, the system can retrieve the selection collection from the memory and transfer it to a guiding unit that is provided to the person. On the basis of that the guiding unit is able to offer individual guidance.

While being guided through the area, the user has a possibility to modify his personal selection collection according to his requirements. To that end the guiding unit may for example present alternatives to the user. The underlying idea is that a person may easily modify his selection collection by including locations of alternative objects therein, for example in a shop, if the person in the end does not consider the object he originally selected to be interesting. In this way the user can adapt his personal selection collection in such a manner that the personal selection collection represents the user's final choice, for example, so that a business transaction can take place on the basis of said personal selection collection, for example. The user can draw up his definitive "shopping list" while being conducted through a shop, for example, and subsequently pay directly at the cash desk.

According to another preferred embodiment, the guiding unit determines the relative location of the unit in the area with the aid of locating means. Thus the guiding unit is at all times aware of the user's location in the area and of the shortest route to the locations included in the user's personal selection collection. On the basis of this the guiding unit may furthermore provide information about alternative objects in the direct vicinity of the user and the guiding unit.

As already mentioned above, the locations identified by the location identification codes may be linked to the specific locations of objects in the area. The method may further comprise a step of informing the person via the guiding unit of alternative objects for the objects present at the identified locations.

According to one embodiment it is also possible to provide supply information from a supply system on the basis of the personal selection collection. The supply information may be selected from a group comprising availability information and delivery times of the objects present at the identified locations, and of available colours, materials or types of the objects present at the identified locations.

According to a second aspect, the invention provides a system for use in a method according to the above-described first aspect of the invention for guiding persons through an area, comprising means for receiving one or more selection collections comprising one or more location identification codes for identifying at least one location in said area, wherein the system more comprises means for registering a collection code for each of said one or more received selection collections and means for storing a personal collection code related to a personal collection code in a memory of at least one guiding unit in response to the receipt of the personal collection code, wherein said at least one guiding unit is arranged for guiding a person to the at least one location that is identified by said one or more location identification codes in the personal selection collection, and further comprising a processing system for receiving the personal selection collection from the guiding unit so as to enable further processing steps on the basis of the personal selection collection.

The guiding unit according to the invention may be a handheld computer or a personal digital assistant (PDA), for example, which may comprise elements selected from the group comprising display means, keyboard, touch screen, loudspeaker, microphone, virtual reality means, communication means such as a Blue tooth adapter, etc. Using the communication means, the modified selection collection may for example be transmitted back to the system at a later point in time for further processing. The returned, modified personal selection collection may for example represent a user's definitive selection of objects he wishes to order in a shop.

The guiding unit may for example being arranged for providing an image of an area. The user may in that case be provided with an outline map of the area, for example, with an indication of the user's current location, but in the alternative case the guiding unit may also provide the user with a realistic image of the area as it is in actual fact, with the user being able to see various objects and locations on the display. Furthermore, the guiding unit may be connected to virtual reality glasses, for example, which the user may wear when walking through the area.

The processing system has been selected from a group comprising a cash desk system for receiving the personal selection collection or for processing business transactions on the basis of the personal selection collection, a printing unit, an information system for providing information about the personal selection collection, a supply system, an ordering system for executing orders, or a logistic system. The processing system may further comprise a management system that is operatively connected to one of the aforesaid systems for carrying out the further processing steps.

According to a third aspect, the invention provides a guiding unit for use in the system as described above.

The invention will now be described in more detail on the bases of non-limitative specific embodiments thereof, with reference being made to the appended figures, in which:
Figures 1A and 1B schematically show various parts of a method according to the invention; and
Figure 2 shows a system according to the present invention.

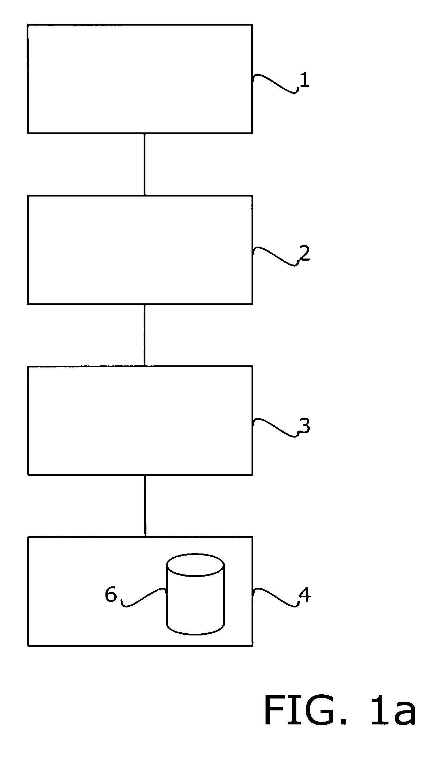

Figure 1A shows a first part of a method according to the invention, in which the user consults a website, for example, prior to being actually guided. On the left side the user finds information about various locations and objects which can be viewed in the area and in which he may have an interest. In step 2 the user composes a selection collection of locations or objects in which he has an interest on the basis of the information that is available on the website. In step 3 said selection collection is transmitted to a system according to the present invention. In said system, the received selection collection will be stored in step 4, for example in a database indicated at 6.

The selection collection is provided with a collection code upon storage thereof, by which code the selection collection can be retrieved in the database. It is for example possible to store the selection collection in the database for a number of days or weeks, or until the person who composed the selection collection has visited the area.

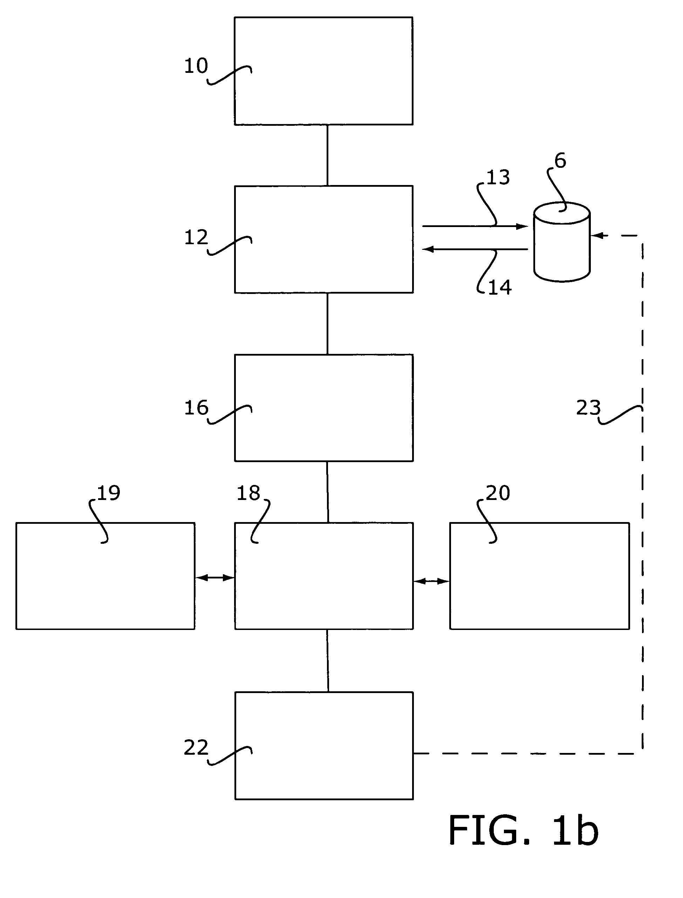

In figure 1B a second part of the method is shown, which second part is carried out when the user actually visits the area. In step 10 the user visits the area. In step 12 inputs a personal collection code into the system, which code the user has received in response to transmitting the selection collection in step 3 of figure 1A, for example. The personal collection code is transmitted to the database 6, as is schematically indicated by the arrow 13. In response to receiving the personal collection code, the database 6 provides the user's personal selection collection, as is schematically indicated by the arrow 14. In step 16 said personal selection collection is stored in a guiding unit that is provided to the user. The user will now be guided through the area in step 18 on the basis of the selection collection as composed by the user. Said selection collection consists of a number of locations in which the user has an interest, which locations may for example be linked to objects in which the user is interested.

While guiding the user, the guiding unit may provide the user with additional information regarding alternative locations and objects that may have the user's interest, as is for example shown in step 19. Furthermore it is possible for the user to modify the personal selection collection that is stored in the guiding unit, as is schematically shown in step 20.

In step 22 the modified personal selection collection, which is stored in the guiding unit, is optionally returned to the database 6 for further processing (this is schematically indicated by the dotted arrow 23). The term "further processing" may include paying for the products in a shop, for example, or providing a paper survey of the objects and locations and the associated information that the user visited in a museum.

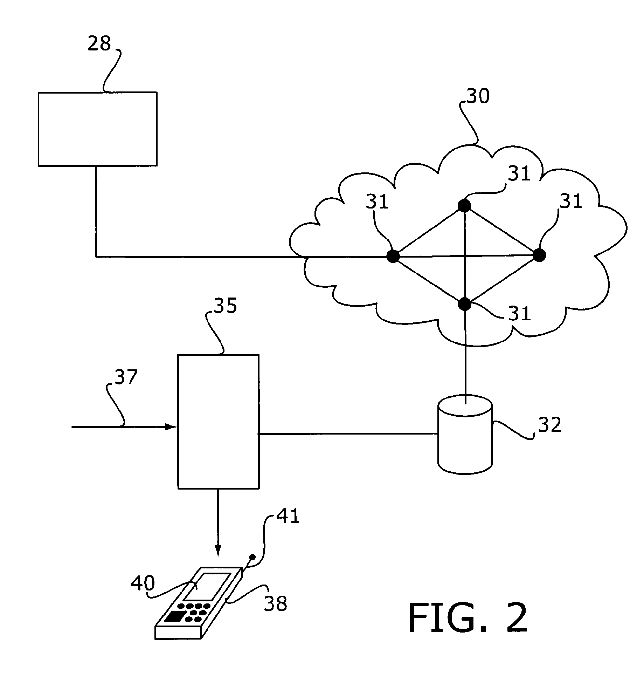

Figure 2 shows a system according to the invention. In the embodiment of the system that is shown in figure 2, a communication unit 28, for example a personal computer, is available to the user being guided round, by means of which the user can make contact with a telecommunication network 30. The telecommunication network 30 consists of a multitude of junctions, schematically represented as junctions 31. Said junctions are interconnected in such a manner that communication therebetween is possible. The user may for example compose a selection collection, using suitable software, that can be transmitted to a database 32 over the network 30. In the database 32, the selection collection composed by the user is stored for use at a later point in time. When the user actually visits the area at a future point in time, the information from the database 32 will be used.

To retrieve the composed selection collection from the database 32, the user can communicate a personal collection code to a management system 35. This is schematically indicated by the arrow 37. In response to the receipt of the personal collection code, the system 35 retrieves the selection collection from the database 32 and transmits it to the guiding unit 38, which will store the selection collection in the main memory (not shown) thereof. The guiding unit will use the information for guiding the user through the area.

The guiding unit may further comprise communication means 41 for communicating with, for example, the system 35. The guiding system furthermore comprises a screen 40, on which the area can be schematically displayed. It is also possible to display an image of a high graphic quality of the area on the screen 40. In that case the user can for example directly see on the screen where the various locations and/or objects are located within the area. The guiding unit 38 may further comprise locating means (not shown) which enable the guiding unit to determine its location within the area. Thus it is possible, for example, to show locations or objects present in the direct vicinity of the guiding unit to the user.

The guiding unit 38 is further arranged for calculating the most optimum route through the area, for example, on the basis of the personal selection collection stored in the memory. Said route may be adapted by the user by inputting alternative objects on locations in the area that the wishes to visit. Furthermore the user may decide to store said alternatives in the selection collection in order to modify said selection collection.

According to another possibility provided by the invention, supply information from a supply system is supplied via the guiding unit. In that case the user directly receives feedback while being shown around, for example about availability and delivery times, available models, material and/or colour selection possibilities, etc.

The modified personal selection collection may be returned to the management system 35 for further processing upon completion of the user's tour of the area. Said further processing may for example consist of storing the selection collection again in the database 32. Furthermore it is possible to forward the selection collection to a cash desk, where the user can pay for the selected objects, for example. Instead of being transmitted to the management system 35, the personnel selection collection may also be sent directly to a cash desk system, a supply management system, an ordering system for processing orders and sending orders to suppliers, or a logistic system. It will be apparent that this provides major advantages for a shopkeeper, who will thus require less staff. For a customer the advantage of this solution is the efficiency with which the order is processed, the elimination of waiting times and the reduced risk of errors in the processing of the order.

Those skilled in the art will appreciate that many modifications and alternative are possible within the scope of the invention. The scope of the invention is defined in the appended claims.

## Claims

1. A method for guiding at least one person through an area, wherein said at least one person is provided with a guiding unit and said at least one person is guided through said area by means of said guiding unit, wherein said method further comprises said steps of:
prior to providing said person with said guiding unit, receiving one or more selection collections comprising one or more location identification codes each location identification code identifying at least one location in said area;
registering a collection code for each of one or more received selection collections;
providing said at least one person with a guiding unit in which a personal selection collection of said one or more selection collections is stored, said personal selection collection being associated with a personal collection code as specified by said person, wherein said guiding unit guides said person to said at least one location that is identified by said one or more location identification codes in said personal selection collection,
**characterised in that** said method further comprises said step of providing said personal selection collection to a processing system from said guiding unit after said guiding step so as to enable further processing steps on said basis of said personal selection collection.

2. A method according to any of the preceding claims, wherein said personal selection collection is modified by said person by means of said guiding unit.

3. A method according to either one of said preceding claims, wherein said further processing steps comprise at least one step selected from a group comprising: transmitting said personal selection collection to a cash desk system, processing business transactions on said basis of said personal selection collection, providing information on said basis of said personal selection collection, for example printing out said information or said personal selection collection, storing said personal selection collection in memory means, transmitting said personal selection collection to a supply management system, updating a supply management system on said basis of said personal selection collection, processing orders, for example sending orders to suppliers, or controlling a logistics system.

4. A method according to any one of said preceding claims, wherein said one or more selection collections are received via a telecommunications network.

5. A method according to claim 4, wherein said one or more selection collections that are received via said telecommunications network are entered by means of communication software.

6. A method according to claim 5, wherein said communication software has been selected from said group comprising design software, a website on said Internet or electronic mail processing software.

7. A method according to any one of said preceding claims, wherein said guiding unit determines said relative location of said unit in said area with said aid of locating means.

8. A method according to claim 7, wherein said guiding unit provide information about locations indicated by said person that are in said vicinity of said guiding unit.

9. A method according to any one of said preceding claims, wherein said locations identified by said location identification codes are linked to objects present at said identified locations in said area.

10. A method according to claim 9, further comprising said step of informing said person via said guiding unit of alternative objects for said objects present at said identified locations.

11. A method according to any one of said preceding claims, further comprising said step of providing supply information from a supply system on said basis of said personal selection collection.

12. A method according to claim 11, wherein said supply information has been selected from a group comprising availability information and delivery times of said objects present at said identified locations, and of available colours, materials or types of said objects present at said identified locations.

13. A method according to any one of said preceding claims, used in a shop.

14. A system for use in a method according to any one of said claims 1-13 for guiding persons through an area, comprising means for receiving one or more selection collections comprising one or more location identification codes for identifying at least one location in said area, wherein said system further comprises means for registering a collection code for each of said one or more received selection collections, and means for storing a personal selection collection associated with a personal collection code in a memory of at least one guiding unit in response to said receipt of said personal collection code, wherein said at least one guiding unit is arranged for guiding a person to said at least one location that is identified by said one or more location identification codes in said personal selection collection, further comprising a processing system for receiving said personal selection collection from said guiding unit so as to enable further processing steps on said basis of said personal selection collection.

15. A system according to claim 14, wherein said means for receiving one or more selection collections are arranged for receiving said selection collections via a telecommunication network.

16. A system according to claim 15, wherein said means for receiving one or more selection collections are arranged for communicating with communication software via said telecommunication network for entering said selection collections

17. A system according to claim 16, wherein said communication software has been selected from a group comprising design software, a website on said Internet or electronic mail processing software.

18. A system according to any one of said claims 14-17, wherein said at least one guiding unit is arranged for modifying said personal selection collection on said instructions of said person.

19. A system according to any one of said claims 14-18, wherein said guiding unit comprises locating means for determining said relative location of said guiding unit in said area.

20. A system according to claim 19, wherein said guiding unit are arranged for providing information about locations indicated by said person that are in said vicinity of said guiding unit.

21. A system according to any one of said claims 14-20, wherein said guiding unit comprises at least one element selected from said group comprising display means, keyboard, touch screen, loudspeaker, microphone, virtual reality means, communication means such as a Bluetooth adapter

22. A system according to any one of said claims 14-21, wherein said guiding unit is arranged for providing an image of said area.

23. A system according to any one of said claims 14-22, wherein said processing system has been selected from a group comprising a cash desk system for receiving said personal selection collection or for processing business transactions on said basis of said personal selection collection, a printing unit, an information system for providing information about said personal selection collection, a supply system, an ordering system for executing orders, or a logistic system.

24. A system according to any one of said claims 14-22, wherein said processing system, with a view to carrying out said further processing steps, is operatively connected to at least one element selected from a group comprising a cash desk system for receiving said personal selection collection or for processing business transactions on said basis of said personal selection collection, a printing unit, an information system for providing information about said personal selection collection, a supply system, an ordering system for executing orders, or a logistic system.

25. A system according to any one of said claims 14-24, wherein said guiding unit is arranged for receiving supply information from a supply system.

26. A guiding unit for use in a system according to any one of said claims 14-25 or a method according to any one of said claims 1-13.
